# EUROPÄISCHE PATENTSCHRIFT

(11) **EP 2 582 481 B1**
(45) Veröffentlichungstag und Bekanntmachung des Hinweises auf die Patenterteilung: **19.09.2018**
(21) Anmeldenummer: 11728612.0
(22) Anmeldetag: 17.06.2011
(51) Int. Cl.: B23F 19/05, B23F 23/12

(54) **VERFAHREN ZUM PROFILIEREN EINES HONWERKZEUGS FÜR DIE HONBEARBEITUNG EINER VERZAHNUNG EINES WERKSTÜCKS**
METHOD FOR PROFILING A HONING TOOL FOR HONING A TOOTHING OF A WORKPIECE
PROCÉDÉ DE PROFILAGE D'UN OUTIL DE RODAGE POUR RODER UNE DENTURE D'UNE PIÈCE

(30) Priorität: 18.06.2010 DE 102010024366
(43) Veröffentlichungstag der Anmeldung: 24.04.2013
(73) Patentinhaber: Präwema Antriebstechnik GmbH, 37269 Eschwege/Werra (DE)
(72) Erfinder: PREIS, Josef, 35287 Amöneburg-Mardorf (DE); SCHIEKE, Jörg, 99092 Erfurt-Marbach (DE)
(74) Vertreter: Cohausz & Florack
(86) Internationale Anmeldenummer: PCT/EP2011/060135
(87) Internationale Veröffentlichungsnummer: WO 2011/157830

(56) Entgegenhaltungen:
- EP-A1- 1 084 786
- EP-A1- 1 319 458
- DE-A1-102007 043 384

## Beschreibung

Die Erfindung betrifft ein Verfahren zum Profilieren eines Honwerkzeugs für die Honbearbeitung einer Verzahnung eines Werkstücks.

Unter dem "Profilieren" eines Honwerkzeugs wird hier das Einbringen einer Verzahnung in das jeweilige Werkzeug verstanden. Davon zu unterscheiden ist das Abrichten, welches durchgeführt wird, um Geometriefehler, die nach der Erzeugung der Verzahnung gegebenenfalls noch vorhanden sind, zu beseitigt, die gewünschte Endform präzise abzubilden und die erforderliche Schärfe des Honwerkzeugs herzustellen.

Dementsprechend fällt unter das erfindungsgemäße "Profilieren" nicht ein in der Fachsprache häufig dem Abrichten untergeordneter "Profiliervorgang", der dazu dient, ein an einem Werkzeug bereits vorhandenes Profil so zu optimieren, dass es den vom Anwender an seine geometrische Exaktheit gestellten Anforderungen entspricht. Das "Profilieren" im Sinne der Erfindung stellt vielmehr einen Arbeitsgang dar, der dem konventionellen "Abrichten" vorgelagert ist und bei dem ein Werkzeugrohling mit der für seine jeweilige Bearbeitungsaufgabe benötigten Grund- oder Basisverzahnung versehen wird. Der einer erfindungsgemäßen Profilierung unterzogene Werkzeugrohling weist demgemäß vor seiner erfindungsgemäßen Bearbeitung entweder noch gar keine Verzahnung auf oder ist in Bezug auf die Verzahnung nur grob vorgeformt bzw. befindet sich in einem Verschleißzustand, bei dem durch ein konventionelles Abrichten die geforderte Genauigkeit der Werkzeuggeometrie nicht mehr erreicht werden kann.

Hintergrund der Erfindung ist insbesondere das Verzahnungshonen. Bei diesem der Gruppe der Hartfeinbearbeitungsverfahren angehörenden Verfahren wälzt kontinuierlich ein zahnradförmig profiliertes Honwerkzeug mit dem zu bearbeitenden Zahnrad unter einem Achskreuzwinkel ab.

Zum Feinbearbeiten von Zahnrädern werden üblicherweise keramisch- oder harzgebundene Werkzeuge mit einer Verzahnung verwendet, deren Gestalt der Form des zu bearbeitenden Zahnrades entsprechen. Gehont wird dabei sowohl mit innen- wie auch mit außenverzahnten Honrädern.

Um über eine lange Einsatzdauer ein geometrisch gleichbleibend genaues Bearbeitungsergebnis zu gewährleisten, muss das jeweils verwendete Honwerkzeug in bestimmten Zeitabständen abgerichtet werden. Zu diesem Zweck werden üblicherweise Abrichtwerkzeuge eingesetzt, in die das Profil des abzurichtenden Werkzeugs sowie die Formelemente eingearbeitet sind. Auf diese Weise können die gegebenenfalls erforderlichen Geometrieänderungen am abzurichtenden Werkzeug erzeugt werden. Im Zuge des Abrichtvorgangs wird das Profil bzw. die Geometrie des Abrichtwerkzeugs auf das abzurichtende Werkzeug übertragen.

Voraussetzung für ein optimales Abrichtergebnis ist bei der konventionellen Vorgehensweise demzufolge, dass für jede Zahnform ein gesondertes Abrichtwerkzeug vorhanden ist. Dies gilt auch dann, wenn in der Honmaschine zusätzliche Verstellachsen für die Relativbewegung von abzurichtendem Honwerkzeug und abrichtendem Abrichtrad vorgesehen sind, um das Honwerkzeug auch für die Bearbeitung von komplex geformten Zahnrädern einwandfrei abrichten zu können.

Unabhängig davon, wie das Abrichten von Honwerkzeugen ausgeführt wird, setzen die bekannten Honverfahren voraus, dass das zum Einsatz kommende Honwerkzeug im Neuzustand möglichst optimal an die Geometrie des jeweils zu honenden Werkstücks angepasst ist, um beim Abrichten möglichst wenig Material abtragen zu müssen. Dies bedingt, dass im Werk des Werkzeugherstellers das Honwerkzeug nach Maßgabe des Honmaschinenherstellers oder -betreibers so exakt gefertigt wird, dass es die Geometrie des zu honenden Werkzeugs möglichst einwandfrei abbildet. Zusätzlich müssen bei seiner Formgebung auch die Eigenarten der jeweiligen Maschine berücksichtigt werden, die sich in bestimmten Verstellmöglichkeiten sowie baulichen und funktionalen Toleranzen etc. äußern.

In der Praxis wird dies dadurch bewerkstelligt, dass in den Werkzeugrohling mit einer Profilierschleifscheibe, die der Form der zwischen zwei Zähnen des Honwerkzeugs zu erzeugenden Lücke entspricht, taktweise jeweils eine Zahnlücke geschnitten wird. Sobald dieser Arbeitsgang absolviert ist, wird die Schleifscheibe aus dem Rohling herausgefahren, der Werkzeugrohling um einen der Teilung der an dem Honwerkzeug zu erzeugenden Verzahnung entsprechenden Winkelbetrag um seine Drehachse gedreht und die nächste Zahnlücke in das Werkzeug geschnitten. Dieser Vorgang wird so oft wiederholt, bis alle Zahnlücken in das Werkzeug eingeformt sind. Konventionell sind nur die Flanken des zum Einbringen des Profils verwendeten Werkzeugs mit Diamanten besetzt und das Werkzeug wird lediglich oszillierend hin- und herbewegt. Nach dem Einformen der Grundverzahnung wird das so vorgeformte Werkzeug abgerichtet, um ihm die an die jeweilige Bearbeitungsaufgabe optimal angepasste Form zu verleihen.
Diese Art der Fertigung derart exakt geformter Werkzeuge ist nicht nur sehr aufwändig und entsprechend teuer, sondern ist auch darauf angewiesen, dass jeweils exakte Daten über den Betriebszustand, die Betriebsbedingungen und die geometrischen Vorgaben zur Verfügung stehen, unter denen das jeweilige Werkzeug eingesetzt werden soll.

EP 1 319 458 A1 zeigt ein Verfahren zum Profilieren eines Honwerkzeugs. Ein unverzahnter Honringrohling wird auf der Werkzeugspindel einer Honmaschine gespannt und mit einem auf der Werkstückspindel der Honmaschine gespannten aussenverzahnten Profilierwerkzeug in Berührung gebracht, im Synchronlauf mit der Drehbewegung des Werkzeugs angetrieben und dabei radial zugestellt. Vor diesem Hintergrund lag der Erfindung die Aufgabe zu Grunde, ein Verfahren zu schaffen, mit dem es auf einfache und kostengünstige Weise möglich ist, ein Honwerkzeug zur Verfügung zu stellen, welches ein hinsichtlich der Fertigungsgenauigkeit optimiertes Arbeitsergebnis gewährleistet, und das es gleichzeitig erlaubt, die Formgebung des Honwerkzeugs mit weitestmöglicher Gestaltungsfreiheit zu variieren.
Diese Aufgabe ist erfindungsgemäß durch das in Anspruch 1 angegebene Verfahren gelöst worden. Vorteilhafte Ausgestaltungen des erfindungsgemäßen Verfahrens sind in den auf Anspruch 1 rückbezogenen Ansprüchen angegeben und werden nachfolgend im Zusammenhang mit dem allgemeinen Erfindungsgedanken näher erläutert.
Gemäß der Erfindung werden also zum Profilieren eines Honwerkzeugs für die Honbearbeitung einer Verzahnung eines Werkstücks mindestens folgende Arbeitsschritte absolviert:
a) Zurverfügungstellen eines unfertig profilierten Honwerkzeug-Rohlings;
b) Einspannen des unfertig profilierten Honwerkzeugs in einen zum Halten des Honwerkzeugs während der Honbearbeitung eines Werkstücks bestimmten Halter einer Honmaschine;
c) Einspannen eines Profilierwerkzeugs in der Werkstückspindel der Honmaschine, wobei das Profilierwerkzeug nach Art eines schmalen, scheibenförmigen Zahnrads ausgebildet ist und seine Breite geringer ist als die Breite des an dem Honwerkzeug zu erzeugenden Verzahnungsprofils;
d) Ausrichten und Bewegen von Profilierwerkzeug und Honwerkzeug relativ zueinander derart, dass das Profilierwerkzeug in Eingriff mit dem Honwerkzeug kommt und an dem Honwerkzeug das für die Honbearbeitung der Verzahnung des Werkstücks erforderliche Verzahnungsprofil abbildet; und das schmale Profilierwerkzeug zur Erzeugung der Flankenlinie der Zähne des zu profilierenden Honwerkzeugs während des Arbeitsschritts in Richtung der Werkstückachse (Z-Richtung) geführt wird.
Das erfindungsgemäße Verfahren zum Profilieren eines Honwerkzeugs für die Honbearbeitung einer Verzahnung eines Werkstücks geht somit aus von einem Honwerkzeug-Rohling, der im unfertig profilierten Zustand zur Verfügung gestellt wird (Arbeitsschritt a)). Unter dem Begriff "unfertig profiliert" sind dabei alle Honwerkzeuge zusammengefasst, die aufgrund ihrer unvollendeten bzw. unvollkommenen Formgebung nicht geeignet sind, mit dem jeweils zu honenden Werkstück ordnungsgemäß in Eingriff gebracht zu werden. Hierunter fallen Honwerkzeuge, die vollständig unprofiliert sind, also noch keinerlei an die Verzahnung des zu honenden Werkstücks angepasste Profilierung besitzen, oder solche Werkzeuge, die bereits grob vorprofiliert sind, deren Geometrie jedoch noch nicht mit der erforderlichen Genauigkeit ausgeprägt ist.

Des Weiteren können für das erfindungsgemäße Verfahren Honwerkzeuge verwendet werden, die bereits für die Honbearbeitung eingesetzt worden sind, nun aber einen Verschleißzustand erreicht haben, aufgrund dessen sie für ihren ursprünglichen Einsatzzweck unbrauchbar sind. Diese Werkzeuge sind in diesem Sinne ebenfalls "unprofiliert", da sie nicht mehr ordnungsgemäß verwendet werden können. Mit Hilfe des erfindungsgemäßen Verfahrens können derart verschlissene Werkzeuge auf einfache Weise so aufgearbeitet werden, dass sie wieder für eine Honbearbeitungsaufgabe eingesetzt werden können. Voraussetzung dazu ist lediglich, dass an dem Honwerkzeug noch ausreichend Schneidstoffvolumen vorhanden ist, um in erfindungsgemäßer Weise eine Profilierung in das Honwerkzeug einzubringen. Die Anpassung der Abmessungen eines zuvor verschlissenen, als solches nicht mehr zur Geometrie des zu honenden Werkstücks passenden Honwerkzeugs kann dabei beispielsweise dadurch erfolgen, dass unter Berücksichtigung des Größenverhältnisses von Honwerkzeug zu Werkstück die Zähnezahl des Werkzeugs so angepasst wird, dass ein einwandfreier Engriff von Werkzeug und Werkstück beim Honen gewährleistet ist.

Ein für die Erfindung wesentlicher Gedanke besteht nun darin, dass einerseits das unfertig profilierte Honwerkzeug in einen zum Halten des Honwerkzeugs während der Honbearbeitung eines Werkstücks bestimmten Halter derjenigen Honmaschine eingespannt wird, in der das Honwerkzeug nach erfolgter Profilierung zum Einsatz kommen soll (Arbeitsschritt b)), und dass andererseits zum Profilieren des unfertigen Honwerkzeugs das Profilierwerkzeug in die Werkstückspindel der Honmaschine eingespannt wird, also an den Platz gesetzt wird, an dem das zu honende Werkstück während der Honbearbeitung sitzt (Arbeitsschritt c)). Bei dem Halter, in den das Honwerkzeug eingespannt wird, kann es sich um einen so genannten "Honkopf" handeln, wie er standardmäßig bei konventionellen Honmaschinen vorhanden ist.

Die in der voranstehend beschriebenen Weise in die jeweilige Honmaschine eingespannte Profilier- und Honwerkzeuge werden anschließend derart ausgerichtet und relativ zueinander bewegt, dass das Profilierwerkzeug in Eingriff mit dem Honwerkzeug kommt und an dem Honwerkzeug das für die Honbearbeitung der Verzahnung des Werkstücks erforderliche Verzahnungsprofil abbildet (Arbeitsschritt d)). Das an der Stelle des zu honenden Werkstücks sitzende Profilierwerkzeug schneidet dementsprechend in das zu profilierende, ursprünglich unfertig profilierte Honwerkzeug unter den Bedingungen, die sich bei der anschließenden Honbearbeitung des zu bearbeitenden Werkstücks stellen. In Folge dessen stellt sich am Honwerkzeug ein Verzahnungsprofil ein, das bei bestmöglicher Annäherung den geometrischen Vorgaben entspricht, die bei der Honbearbeitung des Werkstücks einzuhalten und zu berücksichtigen sind.

Dabei fließen bei der erfindungsgemäßen Erzeugung der Profilierung nicht nur die von der Konstruktion und Auslegung des Werkstücks herrührenden Maßgaben, sondern auch die maschinenbedingten Eigenarten ein, wie Toleranzen, Verstellmöglichkeiten etc., ohne dass es dazu besonderer Maßnahmen bedarf. Im Ergebnis wird so ein Honwerkzeug erhalten, das unter Berücksichtigung der Gegebenheiten der jeweiligen Honmaschine optimal an die jeweilige Honaufgabe angepasst ist und so ebenso optimale Honergebnisse gewährleistet.

Das Ausrichten und die für den Profilierungsvorgang erforderliche Relativbewegung von Profilierwerkzeug und Honwerkzeug erfolgt typischerweise derart, dass zunächst der dem Honwerkzeug zugeordnete Halter mit dem unprofilierten Honwerkzeug in einen vorgegebenen Achskreuzwinkel geschwenkt und das Profilierwerkzeug anschließend in axialer Richtung entlang des zu profilierenden Honwerkzeugs bewegt wird.

Im Fall, dass es sich bei dem Honwerkzeug um einen Honring zum Honen eines mit einer Außenverzahnung versehenen Zahnrads handelt, fährt das Profilierwerkzeug dabei durch das in diesem Fall ringförmig ausgebildete Honwerkzeug. Soll mit dem Honwerkzeug dagegen die Innenverzahnung eines Werkstücks gehont werden, so fährt das Profilierwerkzeug außen entlang des in diesem Fall mit einer Außenverzahnung versehenen Honwerkzeugs. Genauso ist es möglich, mit einer schneckenförmigen oder anderen Verzahnung versehene Honräder in erfindungsgemäßer Weise zu profilieren. Dementsprechend kann das zu profilierende Honwerkzeug selbstverständlich auch eine Außenverzahnung aufweisen und das Profilierwerkzeug ringförmig ausgebildet und mit einer Innenverzahnung versehen sein oder sowohl das zu profilierende Honwerkzeug als auch das Profilierwerkzeug eine Außenverzahnung aufweisen. Wesentlich ist lediglich, dass die Profilierung von den Verhältnissen ausgeht, die bei der anschließenden Honbearbeitung des zu honenden Werkstücks gegeben sind.

Besonders effektiv und zeitsparend kann die erfindungsgemäße Profilierung auf Maschinen vorgenommen werden, bei denen eine spanende Bearbeitung eines Werkstücks nach Art des Wälzschälens möglich ist. Beim Wälzschälen werden die Drehachsen von Werkzeug und Werkstück windschief zueinander angeordnet. Im Schnittvorgang wälzen Werkzeug und Werkstück aufeinander ab, wobei durch die windschiefe Achsanordnung eine Relativgeschwindigkeit zwischen Werkzeug und Werkstück entsteht. Diese Relativbewegung wird als Schnittbewegung ausgenutzt und hat seine Hauptschnittrichtung entlang der Zahnlücke des Werkstücks (s. Handbuch der Fertigungstechnik, Band 3/2 "Spanen", Carl Hanser Verlag München Wien 1980, Seiten 415 - 417).

Während des Profiliervorgangs werden typischerweise das Profilierwerkzeug über die Werkzeugspindel und das Honwerkzeug über den ihm zugeordneten Halter der Honmaschine rotierend angetrieben. Das Drehzahlverhältnis zwischen dem Profilierwerkzeug und der Werkstückspindel entspricht dabei im einfachsten Fall dem Zähnezahlverhältnis zwischen dem Honwerkzeug und dem Profilierwerkzeug.

Grundsätzlich ist es denkbar, ein Profilierwerkzeug so auszubilden, dass seine Form dem zu honenden Werkstücks weitestgehend identisch entspricht. In diesem Fall kann das Profilierwerkzeug eine bestimmte, an die jeweilige Honaufgabe optimal angepasste Profilierung erzeugen. Dies kann dann zweckmäßig sein, wenn der Profiliervorgang über eine längere Zeit wiederholt vorgenommen wird oder wenn die jeweilige Honmaschine nur für eine eng begrenzte Zahl von speziellen Anwendungsfällen konzipiert ist.
Deutlich steigern lässt sich die Vielseitigkeit des erfindungsgemäßen Verfahrens dadurch, dass das Profilierwerkzeug nach Art eines schmalen, scheibenförmigen Zahnrads ausgebildet ist und seine Breite geringer ist als die Breite der an dem Honwerkzeug zu erzeugenden Profilierung. Bei dem erfindungsgemäßen Verfahren wird somit ein Profilierwerkzeug eingesetzt, das gegenüber der Breite des zu profilierenden Honwerkzeugs sehr schmal ist. Dementsprechend ist gemäß einer praxisgerechten Ausgestaltung die in Richtung seiner Drehachse gemessene Breite der mit dem zu profilierenden Honwerkzeug in Eingriff kommenden Zähne des Profilierungswerkzeugs um so viel kleiner als die Breite des Honwerkzeugs, dass das Profilierwerkzeug zum Überstreichen der Breite des zu profilierenden Honwerkzeugs um eine Länge in Z-Richtung bewegt werden muss, die einem Vielfachen der Breite der Zähne des Profilierwerkzeugs entspricht. Das derart schmale Profilierwerkzeug wird mit den Verzahnungen des zu profilierenden Honwerkzeugs in Eingriff gebracht. Das Profilierwerkzeug und das Honwerkzeug werden im Profilierbetrieb dann über jeweils einen eigenen Antrieb um jeweils eine Drehachse drehend angetrieben.
Gleichzeitig wird ihre Relativposition mittels geeigneter individuell steuerbarer Stellantriebe der Werkzeugspindel und des Honwerkzeug-Halters der Honmaschine in Richtung (Z-Richtung) der Drehachse des Profilierwerkzeugs und eine dazu quer ausgerichtete Richtung (X-Richtung) sowie erforderlichenfalls durch zusätzliche Verdrehung um die Drehachse (B-Achse) des zu bearbeitenden Werkzeugs und/oder um die Drehachse (C-Achse) des Profilierwerkzeugs mittels ebenfalls jeweils individuell steuerbarer Antriebe verstellt, um die gewünschte Form (Balligkeit, Konizität) der Zähne des zu profilierenden Honwerkzeugs zu erzeugen. Die geringe Breite des Profilierwerkzeugs erlaubt es dabei, die Schmalseiten der Zähne des Profilierwerkzeugs unabhängig von der Gestalt und Ausrichtung der Zahnflanken des zu bearbeitenden Honwerkzeugs so zu gestalten, dass die jeweilige Kontaktfläche zwischen dem zu profilierenden Honwerkzeug und dem Profilierwerkzeug auf ein Minimum reduziert ist.
Letzteres erweist sich dann als besonders zweckmäßig, wenn ein schrägverzahntes Werkzeug mit einem erfindungsgemäß schmalen Profilierwerkzeug bearbeitet wird. In diesem Fall ist an dem schmalen Profilierwerkzeug der am Honwerkzeug zu erzeugende Schrägungswinkel allenfalls angenähert. Die Erzeugung des Schrägungswinkels erfolgt stattdessen durch die von dem Profilierungswerkzeug während des Profilierbetriebs ausgeführten Bewegungen. Entsprechendes gilt, wenn mittels eines erfindungsgemäß schmalen Profilierwerkzeugs ein Honwerkzeug profiliert wird, das für die Bearbeitung eines geradverzahnten Werkstücks bestimmt ist.

Durch Verwendung eines schmalen Profilierwerkzeugs kann somit das erfindungsgemäße Profilieren im Zuge des Profiliervorgangs unabhängig von der Form der jeweils zu bearbeitenden Zähne bei in Eingriff befindlichem Profilierwerkzeug und zu profilierendem Honwerkzeug in einer weitestgehend frei steuerbaren Bewegung entlang der Zahnflanken des zu profilierenden Honwerkzeugs bewegt werden.

Beim erfindungsgemäß erfolgenden Profilieren von schrägverzahnten oder in anderer Weise komplex geformt verzahnten Honwerkzeugen mit einem schmalen Profilierwerkzeug der voranstehend erläuterten Art wird demzufolge der jeweilige Schrägungswinkel bzw. die jeweils abzubildende Zahnform nur durch die Bewegung des Profilierungswerkzeugs bestimmt, die es bei seinem Weg entlang der Zahnflanke des Zahns ausführt, mit dem es jeweils in Eingriff steht. Auf diese Weise können mittels der an konventionellen Feinbearbeitungsmaschinen standardmäßig vorhandenen Verstellmöglichkeiten in X- und Z-Richtung sowie um die B- und C-Achse die am jeweils bearbeiteten Zahn zu erzeugende Form allein durch Maschinensteuerung vorgegeben werden.

Wird ein schmales Profilierwerkzeug der voranstehend erläuterten Art eingesetzt, so sollte dieses Werkzeug so ausgelegt werden, dass die Bearbeitung des zu profilierenden Honwerkzeugs nach Art einer Klinge nur über die Stirnschneide des Profilierwerkzeugs erfolgt. Nach heutigem Stand ist deshalb nur noch eine gewisse Mindestdicke des Werkzeugs erforderlich, um das die Schneide bildende Werkzeugteil ausreichend abzustützen. Bei praktischen Versuchen haben sich in dieser Hinsicht solche schmalen Profilierwerkzeuge als besonders betriebssicher bewährt, bei denen die Breite der mit dem zu profilierenden Honwerkzeug in Eingriff kommenden Zähne maximal 6 mm dick ist. Im Hinblick auf die Vielseitigkeit und Freiheit der Formgebung des zu profilierenden Honwerkzeugs ist es jedoch vorteilhaft, wenn die Dicke des Profilierwerkzeugs möglichst gering ist, insbesondere auf maximal 4 mm beschränkt ist.

Zum Profilieren eines zum Honen eines schrägverzahnten Werkstücks vorgesehenen Honwerkzeugs wird eine zusätzliche Verdrehung in Abhängigkeit von der axialen Zustellung angewendet. Diese zusätzliche Verdrehung wird durch die Steigung der zu profilierenden Schrägverzahnung des Honwerkzeugs bestimmt. Um dies zu ermöglichen, kann das Profilierwerkzeug während des Arbeitsschritts d) mit einer geänderten Steigung bezogen auf das zu profilierende Honwerkzeug bewegt werden. Eine solche Konstellation erweist sich insbesondere dann als praxisgerecht, wenn ein schmales Profilierungswerkzeug der voranstehend erläuterten Art eingesetzt wird.

Das Profilierwerkzeug kann eine Zähnezahl oder einen Schrägungswinkel aufweisen, die von der Zähnezahl bzw. dem Schrägungswinkel des zu bearbeitenden Werkstücks abweichen, um beispielsweise Werkstücke zu bearbeiten, die sich lediglich hinsichtlich ihrer Zähnezahl oder ihres Schrägungswinkels unterscheiden. In diesem Fall werden die Einstellwerte "Achsabstand" und "Achskreuzwinkel" der Maschine beim Profilieren nach den mathematischen Zusammenhängen für eine Schraubradpaarung neu berechnet und weichen insoweit von denen für die Bearbeitung des Werkstückes ab.

Grundsätzlich lässt sich das erfindungsgemäße Verfahren so durchführen, dass das erhaltene profilierte Honwerkzeug unmittelbar zur Honbearbeitung eines Werkstücks eingesetzt werden kann. In bestimmten Anwendungsfällen kann es jedoch sinnvoll oder erforderlich sein, dass nach dem Profilieren und vor der ersten Honbearbeitung zusätzlich ein Abrichten des Honwerkzeugs durchgeführt wird. Dies kann beispielsweise dann zweckmäßig sein, wenn ein Abrichten im Rahmen einer standardisierten Arbeitsablaufplanung vorgesehen ist oder die an dem Honwerkzeug zu erzeugende Profilierung so gestaltet ist, dass sie eine vor der Honbearbeitung zusätzliche Abrichtbehandlung erfordert. Durch das vor der ersten Inbetriebnahme eines neuen Honwerkzeugs erfolgende Erstabrichten kann die Geometrie des Honwerkzeugs noch exakter an die Gegebenheiten der jeweiligen Honmaschine angepasst werden. Dieses Erstabrichten wird üblicherweise mit dem Diamant-Abrichtzahnrad durchgeführt, das auch für die weiteren Abrichtvorgänge benutzt wird.

Das erfindungsgemäß eingesetzte Profilierwerkzeug besteht bevorzugt mindestens in dem Bereich, in dem es während der Profilierungsbearbeitung mit dem zu profilierenden Honwerkzeug in Kontakt kommt, aus einem Diamantwerkstoff. D.h., bei dieser Ausgestaltung der Erfindung wird ein Profilierwerkzeug eingesetzt, das zumindest im Bereich seiner mit dem Honwerkzeug in schneiden Eingriff kommenden Schneiden aus Diamant besteht. Eine besonders praxisgerechte Ausgestaltung der Erfindung ist dabei dadurch gekennzeichnet, dass zumindest der mit dem abzurichtenden Werkzeug in schneidenden Eingriff kommende Abschnitt des Profilierungswerkzeug aus einem scheibenförmigen Diamantwerkstoffrohling geschnitten ist.

Als Werkstoff für ein erfindungsgemäßes Profilierungsrad sind alle hochharten Werkstoffe geeignet, die eine ausreichend hohe Härte, Verschleißfestigkeit und Belastbarkeit besitzen. Hierzu zählt insbesondere Diamant in seinen verschiedenen Modifikationen, wie beispielsweise
- polykristalliner Diamantwerkstoff, in der Fachsprache auch unter der Kurzbezeichnung "PKD" oder "PCD" bekannt. Aus PKD-Material vorgefertige Ronden, bei denen eine polykristalline Diamantschicht beispielsweise durch Abscheiden aus der Gasphase oder Auflöten einer vorgefertigten Scheibe bereits fest auf einem Trägermaterial aufgebracht ist, stehen auf dem Markt in unterschiedlichen Dicken zur Verfügung.
- Diamant, der chemisch als Schicht oder Körper abgeschieden ist.
- Diamant-Verbundwerkstoffe, die nach dem Vacuum-Diffusions-Verfahren "VDV" hergestellt sind. Einzelheiten zum VDV sind beispielsweise in der Veröffentlichung Diamond-Business, Heft 3, 2010, S. 46 - 48) erläutert.
- Sinterwerkstoffe, die aus Diamantkörnungen und Metallbindung hergestellt sind. Hierunter fällt auch Diamant in Hartmetallbindung.

Werden an die Standzeit des Profilierwerkzeugs geringere Anforderungen gestellt, kann das Profilierwerkzeug auch aus einem Werkstoff gefertigt sein, der eine geringere Härte besitzt. Hierfür kommen beispielsweise hochfeste Hartmetalle, kubisches Bornitrid ("CBN") oder Werkstoffe auf keramischer Basis in Frage.

Durch stoffschlüssiges Verbinden, z.B. Aufkleben oder - löten von PKD oder synthetisch monokristallinen Diamantkörpern, die als dünne Scheiben oder dickere Platten vorliegen, lassen sich größere Ausgangsplatinen für die Erzeugung eines erfindungsgemäßen Profilierwerkzeugs kostengünstig herstellen. Unabhängig davon wie, der Diamantwerkstoff auf das Trägermaterial aufgebracht bzw. an ihm befestigt wird, kann das betreffende Trägermaterial bei einem erfindungsgemäßen Profilierwerkzeug als Träger dienen.

Wird der Diamantwerkstoffrohling nicht auf einem ausreichend stabilen Trägermaterial angeliefert, kann es zweckmäßig sein, einen separaten Träger vorzufertigen und den Diamantwerkstoff darauf in geeigneter Weise zu befestigen.

Hohe Schnittleistungen lassen sich beim erfindungsgemäßen Verfahren dadurch erreichen, dass das Profilierwerkzeug mit einer stirnseitigen Schneide das Material des zu profilierenden Honwerkzeugs abträgt. Dabei kann der Schneidvorgang aufgrund der maximalen Bewegungsfreiheit, die durch die erfindungsgemäße Vorgehensweise eröffnet wird, so ausgelegt werden, dass der Materialabtrag am zu profilierenden Werkzeug ausschließlich über die Stirnschneiden des Profilierwerkzeugs erfolgt. So lässt sich mittels eines derart gestalteten Profilierwerkzeugs das Profilieren problemlos nach Art einer Wälzschälbearbeitung ausführen, bei der der wesentliche Materialabtrag über die Stirnschneiden des Profilierwerkzeugs erfolgt.

Nachfolgend wird die Erfindung anhand einer ein Ausführungsbeispiel darstellenden Zeichnung näher erläutert. Es zeigen jeweils schematisch:

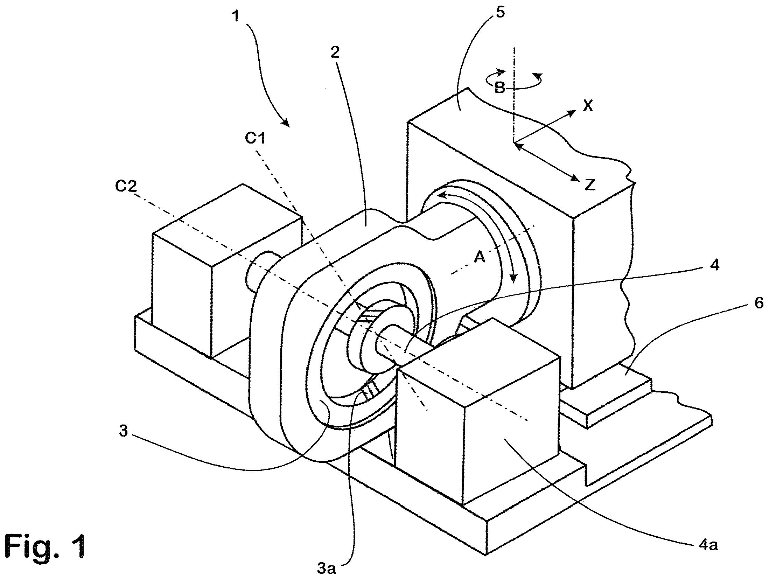

- Fig. 1: einen Ausschnitt einer Honmaschine in perspektivischer Ansicht;

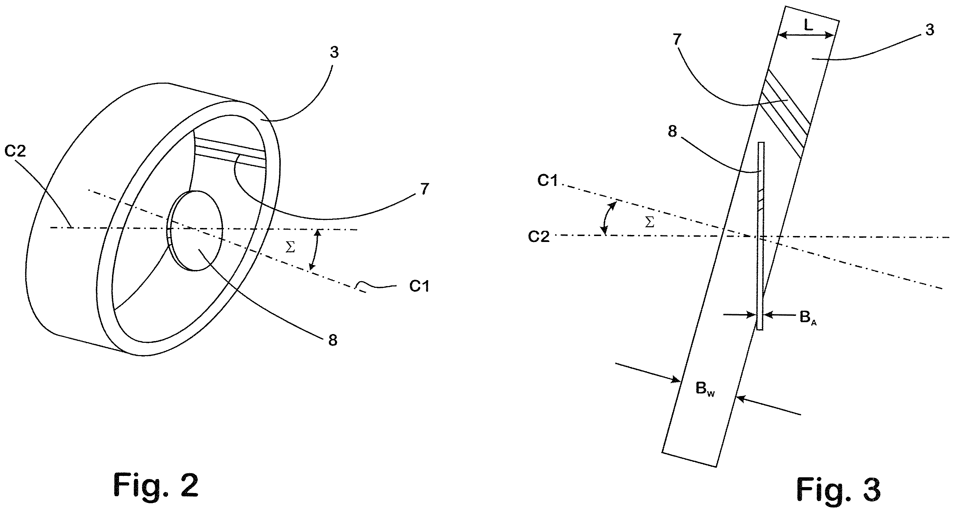

- Fig. 2: ein Honwerkzeug mit einem in Eingriff befindlichem Profilierwerkzeug in perspektivischer Ansicht;
- Fig. 3: das Honwerkzeug mit dem Profilierwerkzeug in einer längsgeschnittenen Ansicht;

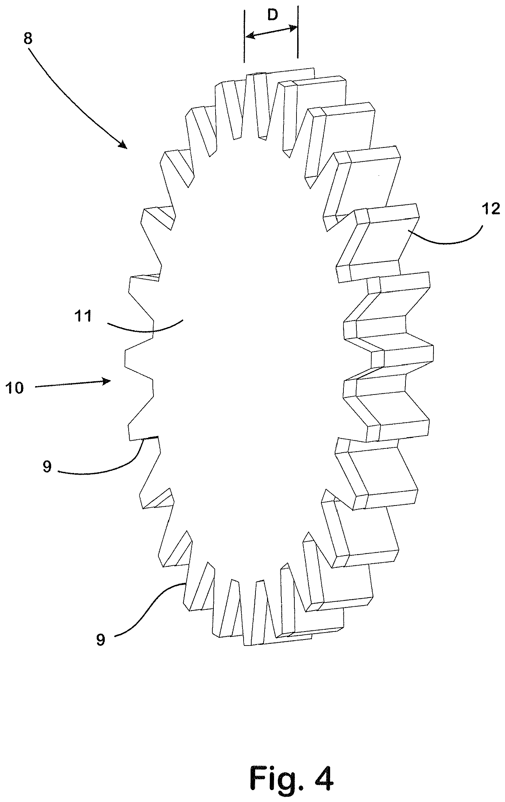

- Fig. 4: das Profilierwerkzeug in einer perspektivischen Ansicht.

Weder die räumliche Zuordnung der nachfolgend beschriebenen Bauelemente noch die geometrischen Verhältnisse sind in den Figuren maßstäblich richtig dargestellt.

Die Honmaschine 1 weist einen Halter 2 für ein als ringförmiges Honrad ausgebildetes, mit einer Innenverzahnung 3a versehenes Honwerkzeug 3 und eine Werkstückspindel 4 zum Einspannen eines hier nicht dargestellten, in Form eines außenverzahnten Zahnrads vorliegenden Werkstücks auf, dessen Außenverzahnung mittels des Honwerkzeugs 3 gehont werden soll.

Das Honwerkzeug 3 ist mittels eines Drehantriebs in dem ihm zugeordneten Halter 2 drehbar gelagert. Ebenso ist die Werkstückspindel 4 mittels eines Drehantriebs 4a um eine mit ihrer Längsachse zusammenfallende und sich durch die vom Honwerkzeug 3 umschlossene Öffnung erstreckende Drehachse C2 drehbar angetrieben.

Zusätzlich ist der Halter 2 mittels eines nicht dargestellten Stellantriebs um eine Horizontalachse A schwenkbar angetrieben, die quer zur Drehachse C2 der Werkstückspindel 4 ausgerichtet ist.

Der Halter 2 ist an einem Gehäuseblock 5 gelagert, der auf einem Kreuzschlitten 6 sitzt, der in zwei orthogonal zueinander und horizontal ausgerichtete Stellachsen X,Z linear verstellbar ist. Die eine Stellachse Z des Kreuzschlittens 6 ist dabei parallel zur Drehachse C2 der Werkstückspindel 4 und die zweite Stellachse X quer dazu und parallel zur Schwenkachse A des Halters 2 ausgerichtet. Ebenso ist der Gehäuseblock 5 gemeinsam mit dem Halter 2 um eine vertikal ausgerichtete Schwenkachse B verschwenkbar. Sämtliche Stellbewegungen des Gehäuseblocks 5 werden durch nicht dargestellte Stellmotoren bewirkt, wie sie an konventionellen Honmaschinen der hier beschriebenen Art regelmäßig vorhanden sind. Zusätzlich kann die Steigung der um die C1- und/oder C2-Achse vom zu profilierenden Honwerkzeug 3 bzw. vom zu honenden Werkstück vollführten Drehbewegungen verändert werden. Dies kann mittels voneinander unabhängiger Antriebe erfolgen, die zum Drehen des Honwerkzeugs 3 und dem Werkstück um die ihnen jeweils zugeordnete Drehachse C1 bzw. C2 vorgesehen sind.

Die für die Bewegung in X-, Z- sowie A- und B-Richtung zuständigen Stellantriebe sowie die Antriebe für die Drehungen um die C1- und C2-Achsen werden über eine hier ebenfalls nicht gezeigte frei programmierbare Maschinensteuerung gesteuert.

Um das zum Honen des nicht dargestellten, außenverzahnten Zahnrad-Werkstücks erforderliche Zahnprofil 7 in das Honwerkzeug 3 einzuformen, wird das Honwerkzeug 3 im unprofilierten Neuzustand, in dem es noch keinerlei Verzahnung aufweist, in den Halter 2 so positioniert, als ob es für die Bearbeitung des jeweiligen Werkstücks eingerichtet würde.

Die Flanken der Zähne des in dem Honwerkzeugs 3 zu erzeugenden Zahnprofils 7 sind unter einem Schrägungswinkel schräg zur Drehachse C1 des Honwerkzeugs 3 ausgerichtet.

Zum Profilieren des Honwerkzeugs 3 wird statt eines Werkstücks ein Profilierwerkzeug 8 an der Stelle in die Werkstückspindel 4 eingespannt, an der im normalen Honbetrieb das jeweils zu honende Werkstück sitzt. Das Modul der Verzahnung des Profilierwerkzeugs 8 entspricht im optimalen Fall dem Stirnmodul mₜ des zu profilierenden Honwerkzeugs 3. In der Praxis wird das Modul des Profilierwerkzeugs 8 an dieses ideale Modul weitestgehend angenähert.

Das nach Art einer dünnen Zahnradscheibe ausgebildete Profilierwerkzeug 8 kann in an sich bekannter Weise aus einem aus Metall gefertigten Träger bestehen, dessen den Zahnflanken der Zähne des profilierenden Honwerkzeugs 3 zugeordneten, mit dem zu bearbeitenden Honwerkzeug 3 in Eingriff kommende Schmalseiten mit Diamanten besetzt sind.

Ebenso ist es möglich, das Profilerwerkzeug 8 im Bereich seiner mit dem Honwerkzeug 3 in schneidenden Kontakt kommenden Stirnschneiden 9 insgesamt aus einem Diamantwerkstoff zu fertigen. Das Profilerwerkzeug 8 weist dann an seiner Stirnseite 10 beispielsweise eine aus einem scheibenförmigen Diamantwerkstoffrohling geschnittene zahnradförmige Diamantscheibe 11 auf, die erforderlichenfalls an einer dünnen, beispielsweise aus einem festen Metallwerkstoff bestehenden Träger 12 abgestützt ist. Die Dicke D der Diamantscheibe 11 kann dabei an die jeweils sich in der Praxis ergebenden Anforderungen angepasst sein.

Beim hier beschriebenen Ausführungsbeispiel beträgt die Breite B_{A} des Profilierwerkzeugs 8 weniger als ein Achtel der Breite B_{W} des abzurichtenden Honwerkzeugs 3. Dementsprechend beträgt die Länge L, um die das Profilierwerkzeug 8 in Richtung seiner Drehachse C2 (Z-Richtung) bewegt werden muss, um die Breite B_{W} des Honwerkzeugs 3 zu überstreichen, mehr als das Achtfache der Breite B_{A} des Profilierwerkzeugs 8. Die Zahnform des Profilierwerkzeugs 8 ist dabei jeweils so gewählt, dass der Materialabtrag am zu profilierenden Honwerkzeug 3 jeweils nach Art einer Klinge nur über die Stirnschneiden 9 des Profilierwerkzeugs 8 erfolgt.

Nachdem das Profilierwerkzeug 8 in die Werkstückspindel 4 eingespannt ist, werden das Honwerkzeug 3 und das Profilierwerkzeug 8 so aufeinander zugestellt und das Honwerkzeug 3 zusätzlich um die Schwenkachse A sowie die Schwenkachse B so verschwenkt, dass die nun in Bezug auf die Drehachse C2 windschief ausgerichtete Drehachse C1 des Honwerkzeugs 3 mit der Drehachse C2 des Profilierwerkzeugs 8 einen Achskreuzwinkel ∑ einschließt.

Anschließend werden das Profilierwerkzeug 8 und das zu profilierende Honwerkzeug 3 gleichsinnig um ihre jeweilige Drehachse C1,C2 drehangetrieben und in Stellrichtung Z relativ zueinander bewegt. Der dabei in Z-Richtung zurückgelegte Stellweg ist so groß, dass das Profilierwerkzeug 8 trotz seiner deutlich geringeren Breite B_{A} die gesamte Breite B_{W} des Honwerkzeugs 3 bei einem Hub vollständig überstreicht. Der Abtrag des Materials erfolgt bei der hier beschriebenen Kinematik nach Art des Wälzschälens. Dabei können die Parameter der Profilierungsbearbeitung so eingestellt werden, dass das an dem Honwerkzeug 3 zu erzeugende Profil 7 in einem Hub fertig profiliert ist.

Stellt sich heraus, dass die bei einer einhubigen Bearbeitung auftretenden Belastungen für das Profilierwerkzeug 8 oder das Honwerkzeug 3 zu groß sind, so kann die Profilierungsbearbeitung auch in mehreren Hüben durchgeführt werden. Das Profilierwerkzeug 8 wird in diesem Fall nach Beendigung eines Hubs von dem Honwerkzeug 3 abgehoben und in seine Ausgangsstellung bewegt, um anschließend erneut in der voranstehend beschriebenen Weise mit dem Honwerkzeug 3 in Eingriff gebracht zu werden.

Um einen ausreichenden Materialabtrag pro Hub zu gewährleisten, wird erforderlichenfalls eine zusätzliche Stellbewegung in Stellrichtung X durchgeführt, durch die sich der Gehäuseblock 5 mit dem Halter 2 und dem darin sich drehenden Honwerkzeug 3 stärker der Drehachse C2 des Profilierwerkzeugs annähert.

Die voranstehend aufgezählten, während des Profilierbetriebs ausgeführten Bewegungen von Honwerkzeug 3 und Profilierwerkzeug 8 können durch zusätzliche Schwenk- oder Stellbewegungen entlang eine der Achsen A, B, X oder Z überlagert werden, um bestimmte Formelemente an den Zähnen des zu erzeugenden Zahnprofils 7 des Honwerkzeugs 3 auszuprägen. Insbesondere erlaubt es das erfindungsgemäße Verfahren, besonders große Schrägungswinkel an dem Honwerkzeug 3 abzubilden, wie sie bei einer konventionellen Profilierung nicht ohne Weiteres zu erzeugen sind.

Selbstverständlich ist es ebenso möglich, an Stelle einer Verstellung des Gehäuseblocks in X- und Z-Richtung oder einer Verschwenkung des Gehäuseblocks um die Achse B den Support, auf dem die Werkstückspindel 4 abgestützt ist, auf einem geeigneten hier nicht dargestellten Kreuzschlitten so verschwenkbar zu lagern, dass die Werkstückspindel 4 bei stillstehendem Gehäuseblock 5 mittels dieses Kreuzschlittens in X- und Z-Richtung verfahren und erforderlichenfalls um die Achse B verschwenkt werden kann, um die für die Profilierung des Honwerkzeugs 3 benötigten Relativbewegungen von Profilierwerkzeug 8 und Honwerkzeug 3 auszuführen.

Die in der voranstehend beschriebenen Weise durchgeführte Profilierbearbeitung wird fortgesetzt, bis das Zahnprofil 7 vollständig fertig in das Honwerkzeug 3 eingeschnitten ist. Anschließend wird das Profilierwerkzeug 8 aus der Werkstückspindel 4 entnommen und durch ein Zahnrad-Werkstück ersetzt, an dem dann die normale Honbearbeitung mittels des nun fertig profilierten Honwerkzeugs 3 durchgeführt wird.

Die voranstehend beschriebene Durchführung des erfindungsgemäßen Verfahrens entspricht prinzipiell dem Verfahren des "Wälzschälens". Dieses erlaubt eine besonders schnelle und effektive Bearbeitung des Honwerkzeugs 3 und erweist sich deshalb in der Praxis als besonderes vorteilhaft. Jedoch ist es ebenso möglich, das erfindungsgemäße Verfahren auf Maschinen umzusetzen, bei denen der Materialabtrag beim Honen nach einem anderen Prinzip erfolgt. Entscheidend ist dabei der Gedanke, das Profilierwerkzeug 8 an Stelle des zu honenden Werkstücks zu setzen, das Profilierwerkzeug 8 mit dem unprofilierten Honwerkzeug 3 in Eingriff zu bringen und anschließend beide Werkzeuge so relativ zueinander zu bewegen, dass an dem unfertig profilierten Honwerkzeug 3 das dort vorgesehene Profil abgebildet wird.

Mit dem erfindungsgemäßen Verfahren lassen sich in kürzester Bearbeitungszeit hoch genaue Honwerkzeuge erzeugen. So ist es beispielsweise möglich, durch Anwendung des erfindungsgemäßen Verfahrens in weniger als 30 Sekunden ein zuvor vollständig unprofiliertes, für die Honbearbeitung eines außenverzahnten Zahnrads bestimmtes, radförmiges Honwerkzeug so fertig zu profilieren, dass es unmittelbar in der Honmaschine 1 verwendet werden kann. Die erfindungsgemäß am Honwerkzeug 3 erzeugte Profilierung 7 kann dabei derart sein, dass das Honwerkzeug 3 sofort zur Honbearbeitung verwendet werden kann. Erforderlichenfalls lässt sich das Honwerkzeug 3 jedoch selbstverständlich ebenso noch einem zusätzlichen Erstabrichten unterziehen, wenn dies nach dem vorgesehenen Arbeitsablauf oder aufgrund der geometrischen Gegebenheit des in erfindungsgemäßer Weise fertig gestellten Profils des Honwerkzeugs 3 nötig ist..

### BEZUGSZEICHEN

- 1: Honmaschine
- 2: Halter
- 3a: Innenverzahnung des Honwerkzeugs 3
- 3: Honwerkzeug
- 4: Werkstückspindel
- 4a: Drehantrieb der Werkstückspindel 4
- 5: Gehäuseblock
- 6: Kreuzschlitten
- 7: Zahnprofil des Honwerkzeugs
- 8: Profilierwerkzeug
- 9: Stirnschneiden des Profilierwerkzeugs 9
- 10: Stirnseite des Profilierwerkzeugs 9
- 11: Diamantscheibe des Profilierwerkzeugs 9
- 12: Träger des Profilierwerkzeugs 9

- A: horizontal ausgerichtete Schwenkachse
- B: vertikal ausgerichtete Schwenkachse
- D: Dicke der Diamantscheibe 11
- C1: Drehachse des Honwerkzeugs 3
- C2: Drehachse der Werkstückspindel 4 / des Profilierwerkzeugs 8
- X, Z: Stellachsen

- B_{A}: Breite des Profilierwerkzeugs 8
- B_{W}: Breite des abzurichtenden Honwerkzeugs 3
- L: Länge, um die das Profilierwerkzeug 8 in Richtung seiner Drehachse C2 (Z-Richtung) bewegt werden muss, um die Breite B_{W} des Honwerkzeugs 3 zu überstreichen
- ∑: Achskreuzwinkel

## Patentansprüche

1. Verfahren zum Profilieren eines Honwerkzeugs (3) für die Honbearbeitung einer Verzahnung eines Werkstücks, umfassend folgende Arbeitsschritte:
a) Zurverfügungstellen eines unfertig profilierten Honwerkzeugs (3);
b) Einspannen des unfertig profilierten Honwerkzeugs (3) in einen zum Halten des Honwerkzeugs während der Honbearbeitung eines Werkstücks bestimmten Halter (2) einer Honmaschine (1);
c) Einspannen eines Profilierwerkzeugs (8) in der Werkstückspindel (4) der Honmaschine (1), wobei das Profilierwerkzeug (8) nach Art eines schmalen, scheibenförmigen Zahnrads ausgebildet ist und seine Breite (B_{A}) geringer ist als die Breite (B_{W}) des an dem Honwerkzeug (3) zu erzeugenden Verzahnungsprofils (7);
d) Ausrichten und Bewegen von Profilierwerkzeug (8) und Honwerkzeug (3) relativ zueinander derart, dass das Profilierwerkzeug (8) in Eingriff mit dem Honwerkzeug (3) kommt und an dem Honwerkzeug (3) das für die Honbearbeitung der Verzahnung des Werkstücks erforderliche Verzahnungsprofil (7) abbildet; und das schmale Profilierwerkzeug (8) zur Erzeugung der Flankenlinie der Zähne des zu profilierenden Honwerkzeugs (3) während des Arbeitsschritts in Richtung der Werkstückachse (Z-Richtung) geführt wird.

2. Verfahren nach Anspruch 1, **dadurch gekennzeichnet, dass** die Breite (B_{A}) der mit dem Honwerkzeug (3) in Eingriff kommenden Zähne des Profilierwerkzeugs (8) um so viel kleiner als die Breite (B_{W}) des zu profilierenden Honwerkzeugs (3) ist, dass das Profilierwerkzeug (8) zum Überstreichen der Breite (B_{W}) des zu profilierenden Honwerkzeugs (3) um eine Länge (L) in Z-Richtung der Honmaschine (1) bewegt werden muss, die einem Vielfachen der Breite (B_{A}) der Zähne des Profilierwerkzeugs (8) entspricht.

3. Verfahren nach einem der Ansprüche 1 oder 2, **dadurch gekennzeichnet, dass** die Breite (B_{A}) der mit dem Honwerkzeug (3) in Eingriff kommenden Zähne des Profilierwerkzeugs (8) höchstens 6 mm, insbesondere höchstens 4 mm, beträgt.

4. Verfahren nach einem der Ansprüche 1 bis 3, **dadurch gekennzeichnet, dass** -während des Arbeitsschritts d)
der Achsabstand von zu profilierendem Honwerkzeug (3) und Profilierwerkzeug (8) (X-Richtung) variiert wird
und / oder
das zu profilierende Honwerkzeug (3) und / oder das schmale Profilierwerkzeug (8) entlang bzw. bezogen auf die Drehachsen (B- bzw. C-Achse) verstellt werden.

5. Verfahren nach einem der voranstehenden Ansprüche, **dadurch gekennzeichnet, dass** das schmale Profilierwerkzeug (8) während des Arbeitsschritt d) mit einer geänderten Steigung bezogen auf das zu profilierende Honwerkzeug (3) bewegt wird.

6. Verfahren nach einem der voranstehenden Ansprüche, **dadurch gekennzeichnet, dass** für die Relativbewegung von zu profilierendem Honwerkzeug (3) und Profilierwerkzeug (8) das Honwerkzeug (3) in einen bestimmten Achskreuzwinkel (∑) geschwenkt und das Profilierwerkzeug (8) durch das Honwerkzeug (3) anschließend in axialer Richtung (Z) von dem Profilierwerkzeug (8) durchfahren wird.

7. Verfahren nach einem der voranstehenden Ansprüche, **dadurch gekennzeichnet, dass** das Profilierwerkzeug (8) und / oder das zu profilierende Honwerkzeug (3) während ihrer Relativbewegung um jeweils eine Drehachse (C1,C2) rotieren.

8. Verfahren nach Anspruch 7, **dadurch gekennzeichnet, dass** das Drehzahlverhältnis zwischen dem Honwerkzeug (3) und dem Profilierwerkzeug (8) dem Zähnezahlverhältnis zwischen dem zu profilierenden Honwerkzeug (3) und dem Profilierwerkzeug (8) entspricht.

9. Verfahren nach einem der voranstehenden Ansprüche, **dadurch gekennzeichnet, dass** das Profilierwerkzeug (8) eine Zähnezahl aufweist, die von der Zähnezahl des zu profilierenden Honwerkzeugs (3) abweicht.

10. Verfahren nach einem der voranstehenden Ansprüche, **dadurch gekennzeichnet, dass** das Profilierwerkzeug (8) einen anderen Schrägungswinkel als das zu profilierende Honwerkzeug (3) aufweist.

11. Verfahren nach einem der voranstehenden Ansprüche, **dadurch gekennzeichnet, dass** das Profilierwerkzeug (8) und das zu profilierende Honwerkzeug (3) über jeweils einen eigenen Antrieb um jeweils eine Drehachse (C1,C2) drehend angetrieben werden und dass Stellantriebe zum Verstellen der Relativposition von zu profilierendem Honwerkzeug (3) und Profilierwerkzeug (8) mindestens in Richtung (Z-Richtung) der Drehachse (C2) des Profilierwerkzeugs (8) und eine dazu quer ausgerichtete Richtung (X-Richtung) vorgesehen sind.

12. Verfahren nach einem der voranstehenden Ansprüche, **dadurch gekennzeichnet**, das s das zu profilierende Honwerkzeug (3) ringförmig ausgebildet ist und eine Innenverzahnung aufweist, während das Profilierwerkzeug (8) außenverzahnt ist.

13. Verfahren nach einem der Ansprüche 1 bis 11, **dadurch gekennzeichnet, dass** das zu profilierende Honwerkzeug eine Außenverzahnung aufweist und das Profilierwerkzeug ringförmig ausgebildet und mit einer Innenverzahnung versehen ist.

14. Verfahren nach Anspruch 1 bis 11, **dadurch gekennzeichnet, dass** sowohl das zu profilierende Honwerkzeug als auch das Profilierwerkzeug eine Außenverzahnung aufweisen.

15. Verfahren nach einem der voranstehenden Ansprüche, **dadurch gekennzeichnet, dass** der beim Profilieren der jeweils im Eingriff mit dem zu profilierenden Honwerkzeug (3) befindliche Zahn des Profilierwerkzeugs (8) in mindestens einem seiner Kantenbereiche das zu profilierende Honwerkzeug (3) im Wesentlichen punktförmig berührt.

16. Verfahren nach einem der voranstehenden Ansprüche, **dadurch gekennzeichnet, dass** nach dem Profilieren ein Abrichten des Honwerkzeugs (3) durchgeführt wird.

17. Verfahren nach einem der Ansprüche 1 bis 15, **dadurch gekennzeichnet, dass** das Honwerkzeug (3) nach dem Profilieren einsatzfertig ist.

18. Verfahren nach einem der voranstehenden Ansprüche, **dadurch gekennzeichnet, dass** das Profilierwerkzeug (8) mindestens in dem Bereich, in dem es während der Profilierungsbearbeitung mit dem zu profilierenden Honwerkzeug in Kontakt kommt, aus einem Diamantwerkstoff gefertigt ist.

19. Verfahren nach einem der voranstehenden Ansprüche, **dadurch gekennzeichnet, dass** das Profilierwerkzeug (8) mit einer stirnseitigen Schneide das Material des zu profilierenden Honwerkzeugs (3) abträgt.

## Claims

1. Method for profiling a honing tool (3) for honing a toothing of a workpiece, comprising the following working steps:
a) providing an incompletely profiled honing tool (3);
b) clamping the incompletely profiled honing tool (3) into a holder (2) of a honing machine (1), which holder is intended for holding the honing tool during the honing procedure of a workpiece,
c) clamping a profiling tool (8) in the workpiece spindle (4) of the honing machine (1), wherein the profiling tool (8) is configured in the manner of a slim disc-shaped toothed wheel and the width thereof (B_{A}) is less than the width (B_{W}) of the toothing profile (7) which is to be produced on the honing tool (3);
d) orienting and moving the profiling tool (8) and the honing tool (3) relative to one another such that the profiling tool (8) engages with the honing tool (3) and reproduces on the honing tool (3) the toothing profile (7) required for honing the toothing of the workpiece; and the slim profiling tool (8) for producing the flank line of the teeth of the honing tool (3) to be profiled is guided in the direction of the workpiece axis (Z-direction) during the working step.

2. Method according to claim 1, **characterised in that** the width (B_{A}) of the teeth of the profiling tool (8) which engage with the honing tool (3) is so much smaller than the width (B_{W}) of the honing tool (3) to be profiled that, in order to cover the width (B_{W}) of the honing tool (3) to be profiled, the profiling tool (8) has to be moved by a length (L) in the Z direction of the honing machine (1) which corresponds to a multiple of the width (B_{A}) of the teeth of the profiling tool (8).

3. Method according to any one of claims 1 or 2, **characterised in that** the width (B_{A}) of the teeth of the profiling tool (8) which engage with the honing tool (3) is at most 6 mm, in particular at most 4 mm.

4. Method according to any one of claims 1 to 3, **characterised in that** during working step d),
the axial distance of honing tool (3) to be profiled and profiling tool (8) (X direction) is varied
and/or
the honing tool (3) to be profiled and/or the slim profiling tool (8) are adjusted along or based on the rotational axes (B and C axis).

5. Method according to any one of the preceding claims, **characterised in that** during working step d), the slim profiling tool (8) is moved with an altered inclination based on the honing tool (3) to be profiled.

6. Method according to any one of the preceding claims, **characterised in that** for the relative movement of honing tool (3) to be profiled and profiling tool (8), the honing tool (3) is swivelled into a particular axis crossing angle (∑), and the profiling tool (8) will then be passed through by the honing tool (3) in an axial direction (Z) to the profiling tool (8).

7. Method according to any one of the preceding claims, **characterised in that** the profiling tool (8) and/or the honing tool (3) to be profiled rotate about a respective rotational axis (C1, C2) during their relative movement.

8. Method according to claim 7, **characterised in that** the rotational speed ratio between the honing tool (3) and the profiling tool (8) corresponds to the tooth number ratio between the honing tool (3) to be profiled and the profiling tool (8).

9. Method according to any one of the preceding claims, **characterised in that** the profiling tool (8) has a number of teeth which differs from the number of teeth of the honing tool (3) to be profiled.

10. Method according to any one of the preceding claims, **characterised in that** the profiling tool (8) has a different helix angle from the honing tool (3) to be profiled.

11. Method according to any one of the preceding claims, **characterised in that** the profiling tool (8) and the honing tool (3) to be profiled are driven by their own respective drive, rotating around a respective rotational axis (C1, C2), and **in that** actuators are provided for adjusting the relative position of honing tool (3) to be profiled and profiling tool (8) at least in the direction (Z direction) of the rotational axis (C2) of the profiling tool (8) and in a direction oriented transversely thereto (X direction).

12. Method according to any one of the preceding claims, **characterised in that** the honing tool (3) to be profiled is formed annularly and has an internal toothing, while the profiling tool (8) is externally toothed.

13. Method according to any one of claims 1 to 11, **characterised in that** the honing tool to be profiled has an external toothing and the profiling tool is formed annularly and is provided with an internal toothing.

14. Method according to any one of claims 1 to 11, **characterised in that** both the honing tool to be profiled and the profiling tool have an external toothing.

15. Method according to any one of the preceding claims, **characterised in that** during profiling, the tooth of the profiling tool (8), which tooth is respectively engaged with the honing tool (3) to be profiled, contacts the honing tool (3) to be profiled in a substantially punctiform manner in at least one of its edge regions.

16. Method according to any one of the preceding claims, **characterised in that** after profiling, the honing tool (3) is dressed.

17. Method according to any one of claims 1 to 15, **characterised in that** after profiling, the honing tool (3) is ready for use.

18. Method according to any one of the preceding claims, **characterised in that** the profiling tool (8) is produced from a diamond material at least in the region in which it comes into contact with the honing tool to be profiled during the profiling procedure.

19. Method according to any one of the preceding claims, **characterised in that** the profiling tool (8) removes the material of the honing tool (3) to be profiled by means of a front cutting edge.

## Revendications

1. Procédé de profilage d'un outil de rodage (3) pour le rodage d'une denture d'une pièce, comprenant les étapes de travail suivantes :
a) mise à disposition d'un outil de rodage (3) dont le profilage n'est pas terminé ;
b) montage de l'outil de rodage (3) dont le profilage n'est pas terminé dans un porte-outil (2) d'une rodeuse (1) conçu pour maintenir l'outil de rodage pendant le rodage d'une pièce ;
c) montage d'un outil de profilage (8) dans la broche porte-pièce (4) de la rodeuse (1), l'outil de profilage (8) étant réalisé sous la forme d'une roue dentée étroite en forme de disque et sa largeur (B_{A}) étant inférieure à la largeur (B_{W}) du profil de denture (7) à produire sur l'outil de rodage (3) ;
d) orientation et déplacement de l'outil de profilage (8) et de l'outil de rodage (3) l'un par rapport à l'autre de sorte que l'outil de profilage (8) vienne en prise avec l'outil de rodage (3) et projette sur l'outil de rodage (3) le profil de denture (7) nécessaire pour le rodage de la denture de la pièce ; et que l'outil de profilage (8) étroit soit guidé dans la direction de l'axe de la pièce (direction Z) pendant l'étape de travail afin de former la ligne de flanc des dents de l'outil de rodage (3) à profiler.

2. Procédé selon la revendication 1, **caractérisé en ce que** la largeur (B_{A}) des dents de l'outil de profilage (8) qui viennent en prise avec l'outil de rodage (3) est d'autant plus petite que la largeur (B_{W}) de l'outil de rodage (3) à profiler, que l'outil de profilage (8) doive être déplacé d'une longueur (L) dans la direction Z de la rodeuse (1) pour balayer la largeur (B_{W}) de l'outil de rodage (3) à profiler, ladite longueur (L) correspondant à un multiple de la largeur (B_{A}) des dents de l'outil de profilage (8).

3. Procédé selon la revendication 1 ou 2, **caractérisé en ce que** la largeur (B_{A}) des dents de l'outil de profilage (8) qui viennent en prise avec l'outil de rodage (3) est au maximum égale à 6 mm, particulièrement au maximum égale à 4 mm.

4. Procédé selon l'une des revendications 1 à 3, **caractérisé en ce que**
pendant l'étape de travail d)
l'entraxe de l'outil de rodage (3) à profiler et
de l'outil de profilage (8) (direction X) varie
et/ou
l'outil de rodage (3) à profiler et/ou l'outil de
profilage (8) étroit sont ajustés le long des axes de rotation (axe B ou C) ou en référence à ceux-ci.

5. Procédé selon l'une des revendications précédentes, **caractérisé en ce que** pendant l'étape de travail d), l'outil de profilage (8) étroit est déplacé avec un gradient modifié par rapport à l'outil de rodage (3) à profiler.

6. Procédé selon l'une des revendications précédentes, **caractérisé en ce que** pour le mouvement relatif de l'outil de rodage (3) à profiler et de l'outil de profilage (8), l'outil de rodage (3) est pivoté dans un angle de croisement d'axe (∑) donné et l'outil de profilage (8) est ensuite traversé par l'outil de profilage (8) à travers l'outil de rodage (3) dans la direction axiale (Z).

7. Procédé selon l'une des revendications précédentes, **caractérisé en ce que** l'outil de profilage (8) et/ou l'outil de rodage (3) à profiler tournent respectivement autour d'un axe de rotation (C1, C2) pendant leur mouvement relatif.

8. Procédé selon la revendication 7, **caractérisé en ce que** le rapport de vitesses de rotation entre l'outil de rodage (3) et l'outil de profilage (8) correspond au rapport du nombre de dents entre l'outil de rodage (3) à profiler et l'outil de profilage (8).

9. Procédé selon l'une des revendications précédentes, **caractérisé en ce que** l'outil de profilage (8) possède un nombre de dents qui est différent du nombre de dents de l'outil de rodage (3) à profiler.

10. Procédé selon l'une des revendications précédentes, **caractérisé en ce que** l'outil de profilage (8) possède un autre angle d'hélice que celui de l'outil de rodage (3) à profiler.

11. Procédé selon l'une des revendications précédentes, **caractérisé en ce que** l'outil de profilage (8) et l'outil de rodage (3) à profiler sont entraînés en rotation chacun par le biais d'un mécanisme d'entraînement propre autour d'un axe de rotation (C1, C2) respectif et **en ce que** des servomoteurs sont présents pour l'ajustement de la position relative de l'outil de rodage (3) à profiler et de l'outil de profilage (8) au moins dans la direction (direction Z) de l'axe de rotation (C2) de l'outil de profilage (8) et une direction (direction X) orientée transversalement par rapport à celui-ci.

12. Procédé selon l'une des revendications précédentes, **caractérisé en ce que** l'outil de rodage (3) à profiler est de configuration annulaire et possède une denture interne, alors que l'outil de profilage (8) possède une denture externe.

13. Procédé selon l'une des revendications 1 à 11, **caractérisé en ce que** l'outil de rodage à profiler possède une denture extérieure et l'outil de profilage est de configuration annulaire et est pourvu d'une denture interne.

14. Procédé selon l'une des revendications 1 à 11, **caractérisé en ce que** l'outil de rodage à profiler ainsi que l'outil de profilage possèdent tous deux une denture extérieure.

15. Procédé selon l'une des revendications précédentes, **caractérisé en ce que**, lors du profilage, la dent de l'outil de profilage (8) qui se trouve en prise avec l'outil de rodage (3) à profiler entre en contact de manière essentiellement ponctuelle avec l'outil de rodage (3) à profiler dans au moins l'une de ses zones d'arête.

16. Procédé selon l'une des revendications précédentes, **caractérisé en ce qu'**un dressage de l'outil de rodage (3) est effectué après le profilage.

17. Procédé selon l'une des revendications 1 à 15, **caractérisé en ce que** l'outil de rodage (3) est prêt à l'emploi après le profilage.

18. Procédé selon l'une des revendications précédentes, **caractérisé en ce que** l'outil de profilage (8) est fabriqué dans un matériau à base de diamant, au moins dans la zone dans laquelle il entre en contact avec l'outil de rodage à profiler pendant l'usinage de profilage.

19. Procédé selon l'une des revendications précédentes, **caractérisé en ce que** l'outil de profilage (8) enlève la matière de l'outil de rodage (3) à profiler avec une arête tranchante frontale.
